# EUROPÄISCHE PATENTSCHRIFT

(11) **EP 2 228 770 B1**
(45) Veröffentlichungstag und Bekanntmachung des Hinweises auf die Patenterteilung: **01.08.2012**
(21) Anmeldenummer: 09003499.2
(22) Anmeldetag: 10.03.2009
(51) Int. Cl.: G06T 11/20

(54) **Verfahren und Datenverarbeitungsgerät zur Erzeugung und zur Ausgabe eines mehrdimensionalen Diagramms mit mindestens zwei Graphen**
Method and data entry device for creating and outputting a multidimensional diagram with at least two graphs
Procédé et appareil de traitement des données destinés à la production et l'émission d'un diagramme pluridimensionnel à l'aide d'au moins deux graphes

(43) Veröffentlichungstag der Anmeldung: 15.09.2010
(73) Patentinhaber: Siemens Aktiengesellschaft, 80333 München (DE)
(72) Erfinder: Bäumler, Tobias, 76187 Karlsruhe (DE)

(56) Entgegenhaltungen:
- US-A1- 2005 122 325
- "Excerpt ED - Harris R L" INFORMATION GRAPHICS: A COMPREHENSIVE ILLUSTRATED REFERENCE (PAPERBACK), OXFORD UNIVERSITY PRESS, 31. Dezember 1999 (1999-12-31), Seiten 1-21, XP009119122 ISBN: 978-0-19-513532-9
- HELEN BRADLEY: "Excel Chart Art" MACWORLD, 2. September 2003 (2003-09-02), Seiten 1-3, XP002534441

## Beschreibung

Die Erfindung betrifft ein computerimplementiertes Verfahren zur Erzeugung und zur Ausgabe eines zweidimensionalen Diagramms gemäß dem Oberbegriff des Patentanspruchs 1, und ein Datenverarbeitungsgerät zur Durchführung des Verfahrens gemäß dem Patentanspruch 4.

Mathematische Funktionen, Wertereihen aus Experimenten, Messwerte o.ä. werden oft in zweidimensionalen Diagrammen dargestellt, wobei auf einer Abszisse eine Bezugsgröße dargestellt wird und auf einer Ordinate die zugehörigen Werte, z.B. Funktionswerte oder Messwerte, abgetragen werden. Die dabei entstehende Linie wird als "Graph" bezeichnet. Dabei ist es üblich, bei der Visualisierung von Werte-Paaren die einzelnen Werte als Punkte in ein Diagramm einzuzeichnen und anschlie-βend die Punkte miteinander zu einer geschlossenen Linie zu verbinden, so dass sich ein "geschlossener" Graph in Gestalt einer Linie ergibt.

Oft ist gefordert, dass ein Diagramm mit einem Graphen auch unter schwierigen Bedingungen ablesbar sein soll. In diesen Fällen wird häufig die Fläche zwischen dem Graphen und der Abszisse farbig dargestellt oder mit einem Füllmuster versehen, damit sich ein Betrachter nicht nur an einer dünnen Linie (dem eigentlichen Graphen) orientieren muss, sondern mit der eingefärbten bzw. gefüllten Fläche ein größeres Objekt sieht. Ein solches Diagramm wird auch als "Flächendiagramm" oder "Flächentrend" bezeichnet. Solche Flächendiagramme werden bevorzugt bei Bediengeräten für industrielle Automatisierungsanordnungen verwendet, wobei wichtige Werte, beispielsweise Temperaturverläufe oder andere Prozessparameter, deutlich dargestellt werden müssen. Dabei werden häufig die wichtigsten Parameter oder Werte innerhalb einer einzigen Darstellung miteinander kombiniert, wobei für jeden Parameter oder Wert eine bestimmte Farbe oder ein bestimmtes Muster für die Füllfläche zwischen dem jeweiligen Wert und der Abszisse (meist eine Zeitachse) fest zugeordnet wird.

Eine andere häufige Anforderung an Diagramme besteht darin, dass mehrere Graphen innerhalb ein- und desselben Diagramms dargestellt werden sollen. Somit können die Verläufe der simultan miteinander dargestellten Graphen gut miteinander verglichen werden. Oft werden die Linien, mit denen die verschiedenen Graphen dargestellt werden, jeweils unterschiedlich gestaltet, um deren Verläufe besser differenzieren zu können. So kann beispielsweise ein erster Graph als durchgezogen Linie dargestellt werden, während der nächste Graph gestrichelt dargestellt wird, u.s.w..

In der Druckschrift Harris - "Information Graphics: A Comprehensive Illustrated Reference" (Oxford University Press) sind verschiedene Diagramme offenbart, in denen simultan mehrere Graphen dargestellt sind.

Probleme können auftreten, wenn mehrere Graphen innerhalb eines Flächendiagramms / Flächentrends miteinander (simultan) dargestellt werden sollen. Die eingefärbte bzw. mit einem Füllmuster versehene Fläche des zuletzt bzw. in einer oberen Darstellungsebene dargestellten (eingezeichneten) Graphen verdeckt dabei die Darstellung des oder der zuvor bzw. in einer niedrigeren Darstellungsebene gezeichneten Graphen. Das ist in den Fällen von Nachteil, in denen der zuletzt dargestellte Graph größere Werte als ein zuvor dargestellter Graph aufweist. Zwar kann man diesem Problem teilweise abhelfen, indem derjenige Graph mit den größten Werten zuerst gezeichnet wird, so dass dieser nur teilweise durch den nachfolgenden Graph verdeckt wird, aber dies führt nur in denjenigen Fällen zu befriedigenden Ergebnissen, in denen der zuletzt gezeichnete Graph für jeden Punkt der Abszisse einen niedrigeren Wert aufweist, als ein zuvor gezeichneter Graph. Sofern sich die Graphen berühren oder kreuzen, findet man zwangsläufig entlang der Abszisse Punkte oder Abschnitte (Bereiche), in denen der Verlauf zumindest eines der Graphen nicht sichtbar ist, weil er von einem anderem Graphen bzw. dessen Füllfläche verdeckt wird.

Es ist also eine Aufgabe der vorliegenden Erfindung, die bekannten Flächendiagramme oder Flächentrends mit mehreren Graphen derart zu verändern, dass für jeden Abschnitt der Abszisse der Verlauf jedes Graphen abgelesen werden kann.

Die Aufgabe wird durch ein Verfahren gemäß dem Patentanspruch 1 und durch ein Datenverarbeitungsgerät gemäß dem Patentanspruch 4 gelöst.

Die Lösung der Aufgabe sieht insbesondere ein computerimplementiertes Verfahren zur Erzeugung und zur Ausgabe eines zweidimensionalen Diagramms mit mindestens zwei Graphen vor, wobei auf einer Abszisse eine Bezugsgröße dargestellt wird und auf einer Ordinate die zugehörigen werte, wobei für jeden der darzustellenden Graphen eine Fläche zwischen dem Graphen und der Abszisse mit einer jeweiligen Füllfarbe oder einem jeweiligen Füllmuster versehen wird, wobei die Graphen und die zugehörigen Flächen in bezogen auf eine Darstellungsfläche übereinander liegenden Darstellungsebenen dargestellt werden, und wobei jeweils ein Graph und die zugehörige Fläche einer tiefer liegenden Darstellungsebene von einem Graph und der zugehörigen Fläche einer höher liegenden Darstellungsebene verdeckt wird. Dabei wird das Diagramm abschnittsweise erzeugt und ausgegeben, wobei für jeden Abschnitt der Abszisse ein erster der Graphen und die diesem Graphen zugehörige Fläche mit einem höheren Wert (z.B. Funktionswert oder Messwert) in einer tiefer liegenden Darstellungsebene und ein zweiter der Graphen und dessen zugeordnete Fläche mit einem niedrigeren Wert in einer höher liegenden Darstellungsebene dargestellt werden. vor. Durch die Anwendung dieses Verfahrens wechseln die Graphen für jeden Abschnitt der Abszisse in diejenigen Darstellungsebenen derart, dass eine Verdeckung vermieden wird. Durch diese Weiterentwicklung eines Flächendiagramms bzw. eines sog. Flächentrends ist es möglich, mehrere Kurven innerhalb eines Diagramms/Trends vollständig zu visualisieren. Damit können die Vorteile eines Flächendiagramms hinsichtlich der Übersichtlichkeit und Prägnanz der Darstellung genutzt werden, wobei gleichzeitig der Vorteil eines Liniendiagramms, nämlich die vollständige Sichtbarkeit aller Graphen, erhalten bleiben. Die Zuordnung der Teil-Graphen bzw. Teil-Flächen zu den jeweiligen Darstellungsebenen kann dadurch gesteuert werden, dass die zeitliche Reihenfolge ihrer Erzeugung bzw. Visualisierung/Darstellung in jedem der Abschnitte jeweils neu festgelegt wird.

Dieselben Vorteile werden auch durch ein Datenverarbeitungsgerät zur simultanen Visualisierung von mindestens zwei Graphen innerhalb eines Diagramms erzielt, wobei das Datenverarbeitungsgerät zur Verwendung des vorstehenden computerimplementierten Verfahrens eingerichtet ist.

Vorteilhafte Ausgestaltungen des erfindungsgemäßen Verfahrens sind in den abhängigen Patentansprüchen 2 und 3 angegeben, deren Merkmale und Vorteile auch sinngemäß für das erfindungsgemäße Datenverarbeitungsgerät gelten. Ebenso sind vorteilhafte Ausgestaltungen des erfindungsgemäßen Datenverarbeitungsgerätes in den abhängigen Patentansprüchen 5 bis 9 angegeben, wobei die in diesem Zusammenhang erwähnten Merkmale und Vorteile ebenso für das erfindungsgemäße Verfahren gelten.

So kann das erfindungsgemäße Verfahren auch für die gleichzeitige Darstellung von mehr als zwei Graphen verwendet werden, indem die zusätzlich darzustellenden Graphen jeweils gemäß ihres jeweiligen Wertes (Absolutwert) den Darstellungsebenen zugeordnet werden, wobei in jedem betrachteten Abschnitt derjenige Graph mit dem größten Wert in der (bezogen auf die Darstellungsfläche) untersten Darstellungsebene dargestellt wird und derjenige Graph bzw. Teil-Graph mit dem kleinsten Wert in der obersten Darstellungsebene, so dass keine vollständige Verdeckung eines Graphen bzw. der jeweils zugeordneten Fläche (Füllfläche, Muster, Schraffur, etc.) eintritt.

Üblicherweise werden die von Datenverarbeitungsgeräten dargestellten Graphen aus einer Aneinanderreihung von Bildpunkten erzeugt, wobei vorteilhafter Weise in Richtung der Abszisse für jeden Bildpunkt (Pixel) bzw. für jede Bildspalte separat die Entscheidung darüber getroffen wird, welcher Graph (hier: Bildpunkt) welcher Darstellungsebene zugeordnet wird. Bei einer punktweisen Betrachtung reduziert sich die "Füllfläche" zwischen dem jeweiligen Wert und der Abszisse auf eine Linie, deren Länge dem jeweiligen Wert entspricht. Um dennoch eine Füllfläche als Muster, Schraffur o.ä. darstellen zu können, können nach der Erzeugung des Diagramms zusammenhängende Flächen bzw. Teil-Flächen entsprechend den Anforderungen mit einem Muster oder einer Schraffur etc. versehen werden; dieser Bearbeitungsschritt wird auch als "Rendern" bezeichnet. Alternativ zur punktweisen Betrachtung können die Graphen auch hinsichtlich ihrer Berührungs- oder Schnittpunkte miteinander untersucht werden, wobei die zwischen den Schnittpunkten liegenden Bereiche der Abszisse jeweils als Abschnitt festgelegt werden.

Ein häufiger Anwendungsfall für Flächendiagramme wird durch das Verfahren abgedeckt, wenn es für ein Datenverarbeitungsgerät in Form eines Bediengerätes für eine industrielle Automatisierungsanordnung eingesetzt wird, wobei das Verfahren vorteilhaft zur Darstellung von Prozess- und Steuerungs-Parametern oder zur Darstellung von Messwerten o.ä. eingerichtet ist. Ebenso kann das Verfahren vorteilhaft für ein Datenverarbeitungsgerät verwendet werden, welches für die Visualisierung von Wertereihen aus Tabellenkalkulationsprogrammen, Messwerterfassungsprogrammen o.ä. eingesetzt wird.

Zur genaueren Betrachtung eines ausgewählten der Graphen kann einfach auf eine vollständige Darstellung dieses Graphen bzw. dessen Fläche umgeschaltet werden, indem für das Datenverarbeitungsgerät der Einsatz eines Auswahl- und Selektionsmittels, beispielsweise einer Computer-Maus mit einem Mauszeiger, vorgesehen ist, wobei das "Anklicken" einer einzelnen Teil-Fläche genügt, um den zugehörigen Graphen vollständig in der obersten Darstellungsebene zur Anzeige zu bringen. Vorteilhaft kann die dabei angezeigte Fläche dieses Graphen in einer teilweise transparenten Darstellung erfolgen, so dass die Verläufe der anderen Graphen weiterhin sichtbar sind. Anstelle einer Computer-Maus und eines Mauszeigers kann das Datenverarbeitungsgerät auch über einen berührungsempfindlichen Bildschirm ("Touchscreen") verfügen, wobei das Antippen einer entsprechenden Fläche bzw. Teil-Fläche zur Auswahl genügt.

Ausführungsbeispiele des erfindungsgemäßen Verfahrens und damit auch des erfindungsgemäßen Datenverarbeitungsgerätes werden nachfolgend anhand der Zeichnungen erläutert.

Dabei zeigen:
- Figuren 1, 2, 3: drei Flächendiagramme mit jeweils einem einzelnen Graphen,
- Figur 4: ein Flächendiagramm nach dem Stand der Technik, in dem die Graphen der Figuren 1, 2 und 3 in Kombination miteinander dargestellt werden, und
- Figur 5: die kombinierte Darstellung der Graphen aus den Figuren 1, 2 und 3 nach dem erfindungsgemäßen Verfahren.

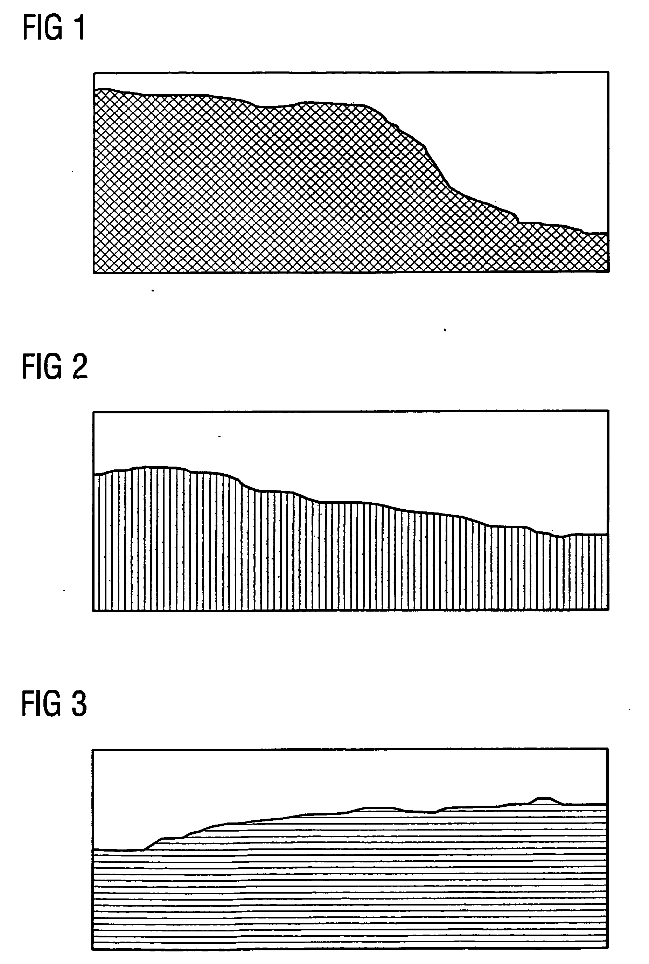

In den Figuren 1, 2 und 3 ist jeweils ein Graph dargestellt, wobei jeweils die Fläche zwischen dem Graphen und der Abszisse (in den Figuren stellt jeweils der untere Rand der Darstellung die Abszisse dar) und dem jeweiligen Wert (dem eigentlichen Graphen, z.B. Funktionswert oder Messwert) jeweils mit einem Füllmuster ausgefüllt ist. Während die Fläche des Graphen in der Figur 1 kreuzweise schraffiert ist, ist die Fläche zu dem Graphen aus Figur 2 vertikal und die Fläche zum Graphen der Figur 3 horizontal schraffiert. Selbstverständlich können die Flächendiagramme der Figuren 1, 2 und 3 anstelle der Schraffuren auch mit unterschiedlichen Farben oder unterschiedlichen Grautönen oder einer Kombination daraus dargestellt werden.

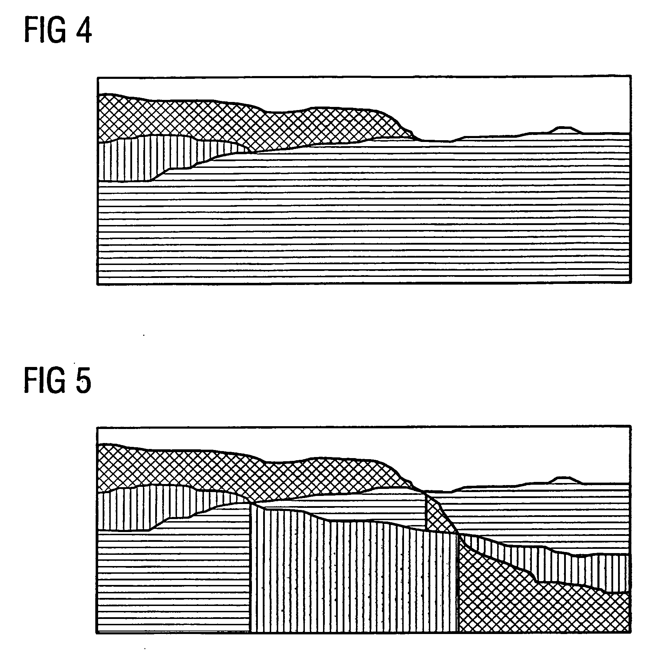

Im Folgenden sei angenommen, dass die Graphen aus den Figuren 1, 2 und 3 innerhalb eines einzigen Flächendiagramms simultan dargestellt werden sollen. Nach einem Verfahren gemäß dem Stand der Technik werden dabei die Graphen mit dem zugehörigen Flächen nacheinander in ein- und dasselbe Diagramm eingezeichnet, wobei es entweder dem Zufall überlassen bleibt, oder aber anderweitig festgelegt wird, welcher der Graphen zuerst und welcher der Graphen zuletzt eingezeichnet wird, wodurch die Zuordnung der Graphen mit den zugehörigen Flächen zu den Darstellungsebenen festgelegt ist. Im Beispiel der Figur 4, welches das resultierende Diagramm nach einem Verfahren aus dem Stand der Technik zeigt, ist zuerst der Graph mit der zugehörigen Fläche aus der Figur 1, danach die Darstellung aus der Figur 2 und schließlich die Darstellung aus der Figur 3 in das resultierende Diagramm eingezeichnet worden. Es ist zu sehen, dass im ersten Drittel des Diagramms (von der linken Seite aus gesehen) noch alle drei Graphen aus den einzelnen Diagrammen gezeigt sind, während in einem mittleren Bereich des Diagramms der aus der Figur 2 stammende Anteil schon nicht mehr sichtbar ist, während das rechte Drittel des Diagramms nur noch den aus der Figur 3 stammenden Anteil zeigt, weil die beiden anderen Anteile von diesem Anteil verdeckt werden.

Die Figur 5 zeigt schließlich dieselbe Kombination der Graphen aus den Figuren 1, 2 und 3, wobei jedoch abschnittsweise die Reihenfolge, in denen die Teil-Graphen visualisiert werden, jeweils neu festgelegt wird, so dass für jeden Abschnitt der Abszisse der Graph mit den größten Werten zuerst gezeichnet wird und somit der untersten Darstellungsebene zugeordnet wird, und derjenige Graph mit den kleinsten Werten zuletzt gezeichnet wird und damit der obersten (höchsten) Darstellungsebene zugeordnet wird. Im ersten Abschnitt des Diagramms (linke Bildseite) bedeutet dies, dass zuerst der Graph aus Figur 1, dann der Graph aus Figur 2 und schließlich der Graph aus Figur 3 berücksichtigt wird. An derjenigen Stelle, an denen sich die Graphen aus Figur 2 und 3 kreuzen, wechselt diese Reihenfolge, so dass derjenige Graph, der in diesem Abschnitt die kleinsten Werte aufweist, im Vordergrund dargestellt wird. Dies ist jetzt der Graph aus der Figur 2. Die Entscheidung darüber, welcher der Graphen in welcher Darstellungsebene gezeichnet wird, wechselt immer dann, wenn sich zumindest zwei der Graphen schneiden, diese also "kreuzen". Bei der Verwendung eines Datenverarbeitungsprogramms, welches die Darstellung punktweise aufbaut, kann diese Entscheidung aber auch für jede "Bildspalte" mit der Breite eines Bildpunktes neu getroffen werden. Das Verfahren wird jetzt so lange fortgesetzt, bis (am rechten Bildrand) schließlich der Graph aus der Figur 3 der untersten Darstellungsebene und der Graph aus der Figur 1 der obersten (höchsten) Darstellungsebene zugeordnet ist. Es ergibt sich also, dass in jedem Abschnitt der Abszisse die Graphen in Form eines Flächendiagramms dargestellt sind, wobei eine vollständige Verdeckung in jedem Fall vermieden wird.

## Patentansprüche

1. Computerimplementiertes Verfahren zur Erzeugung und Ausgabe eines zweidimensionalen Diagramms mit mindestens zwei Graphen,
wobei auf einer Abszisse eine Bezugsgröße dargestellt wird und auf einer Ordinate die zugehörigen Werte,
wobei für jeden der darzustellenden Graphen eine Fläche zwischen dem Graphen und der Abszisse mit einer jeweiligen Füllfarbe oder einem jeweiligen Füllmuster versehen wird,
wobei die Graphen und die zugehörigen Flächen in bezogen auf eine Darstellungsfläche übereinander liegenden Darstellungsebenen dargestellt werden,
wobei jeweils ein Graph und die zugehörige Fläche einer tiefer liegenden Darstellungsebene von einem Graph und der zugehörigen Fläche einer höher liegenden Darstellungsebene verdeckt wird,
**dadurch gekennzeichnet,**
**dass** das Diagramm abschnittsweise erzeugt und ausgegeben wird, wobei für jeden Abschnitt der Abszisse ein erster der Graphen und die diesem Graphen zugehörige Fläche mit einem höheren darzustellenden Wert in einer tiefer liegenden Darstellungsebene und wobei ein zweiter der Graphen und dessen zugeordnete Fläche mit einem niedrigeren darzustellenden Wert in einer höher liegenden Darstellungsebene dargestellt werden.

2. Verfahren nach Patentanspruch 1,
**dadurch gekennzeichnet,**
**dass** das Verfahren zur Darstellung eines oder mehrerer dritter Graphen verwendet wird,
wobei mit jedem der dritten Graphen eine weitere Darstellungsebene eingefügt wird, und
wobei in jedem Abschnitt der Abszisse die darzustellenden Graphen und die zugehörigen Flächen jeweils einer der Darstellungsebenen zugeordnet werden,
wobei die Graphen in aufsteigender Abfolge ihrer Werte jeweils den Darstellungsebenen in absteigender Folge zugeordnet werden und wobei die Darstellungen einer tieferen Darstellungsebene von den Graphen und Flächen einer höheren Darstellungsebene jeweils verdeckt werden.

3. Verfahren nach einem der Patentansprüche 1 oder 2,
**dadurch gekennzeichnet,**
**dass** die Graphen und die Flächen jeweils durch Bildpunkte dargestellt werden, wobei als die Breite jedes Abschnittes der Abszisse die Breite eines Bildpunktes verwendet wird.

4. Datenverarbeitungsgerät zur simultanen Visualisierung von mindestens zwei Graphen innerhalb eines Diagramms,
**dadurch gekennzeichnet,**
**dass** das Datenverarbeitungsgerät zur Verwendung eines der Verfahren gemäß der Patentansprüche 1 bis 3 eingerichtet ist.

5. Datenverarbeitungsgerät nach Patentanspruch 4,
**dadurch gekennzeichnet,**
**dass** das Datenverarbeitungsgerät ein Bediengerät einer industriellen Automatisierungsanordnung ist,
wobei das Bediengerät zur Darstellung von Prozess- und Steuerungs-Parametern oder zur Darstellung von Messwerten eingerichtet ist.

6. Datenverarbeitungsgerät nach Patentanspruch 4 oder 5,
**dadurch gekennzeichnet,**
**dass** das Datenverarbeitungsgerät zur Visualisierung von zumindest zwei Wertereihen aus einer Tabellenkalkulation oder einer anderen Datenquelle vorgesehen ist.

7. Datenverarbeitungsgerät nach einem der Patentansprüche 4 bis 6,
**dadurch gekennzeichnet,**
**dass** das Datenverarbeitungsgerät über ein Auswahlmittel zur Selektion zumindest einer Fläche oder Teil-Fläche der dargestellten Graphen ausgerüstet ist,
wobei das Datenverarbeitungsgerät zur vollständigen Darstellung desjenigen Graphen und dessen zugehöriger Fläche eingerichtet ist,
dessen Fläche bzw. Teil-Fläche durch das Auswahlmittel selektiert ist.

8. Datenverarbeitungsgerät nach Patentanspruch 7,
**dadurch gekennzeichnet,**
**dass** das Auswahl- und Selektionsmittel ein mittels einer Computer-Maus bewegter Cursor oder eine Selektion mittels eines berührungsempfindlichen Bildschirms ist.

9. Datenverarbeitungsgerät nach einem der Patentansprüche 7 oder 8,
**dadurch gekennzeichnet,**
**dass** das Datenverarbeitungsgerät zur vollständigen Darstellung des selektierbaren Graphen in der obersten Darstellungsebene und der anderen Graphen in den darunter liegenden Darstellungsebenen eingerichtet ist.

## Claims

1. Computer-implemented method for the production and output of a two-dimensional chart having at least two graphs,
wherein an abscissa is used to present a reference variable and an ordinate is used to present the associated valves,
wherein for each of the graphs which are to be presented an area between the graph and the abscissa is provided with a respective fill color or with a respective fill pattern,
wherein the graphs and the associated areas are presented in presentation planes located above one another relative to a presentation area,
wherein a respective graph and the associated area in a lower presentation plane are concealed by a graph and the associated area in a higher presentation plane, **characterized**
**in that** the chart is produced and output in sections, wherein for each section of the abscissa a first of the graphs and the area associated with said graph, having a higher value to be presented, are presented in a lower presentation plane and wherein a second of the graphs and the associated area thereof, having a lower value to be presented, are presented in a higher presentation plane.

2. Method according to Patent Claim 1,
**characterized**
**in that** the method is used for presenting one or more third graphs,
wherein for each of the third graphs a further presentation plane is inserted, and
wherein in each section of the abscissa the graphs which are to be presented and the associated areas are respectively attributed to one of the presentation planes,
wherein the graphs are respectively attributed to the presentation planes in descending sequence in ascending order of their values and wherein the presentations of a lower presentation plane are respectively concealed by the graphs and areas of a higher presentation plane.

3. Method according to one of Patent Claims 1 and 2,
**characterized**
**in that** the graphs and the areas are respectively presented by pixels, wherein the width used for each section of the abscissa is the width of a pixel.

4. Data processing appliance for the simultaneous visual display of at least two graphs within a chart,
**characterized**
**in that** the data processing appliance is set up for the use of one of the methods according to Patent Claims 1 to 3.

5. Data processing appliance according to Patent Claim 4,
**characterized**
**in that** the data processing appliance is an operator control appliance for an industrial automation arrangement,
wherein the operator control appliance is set up for the presentation of process and control parameters or for the presentation of measured values.

6. Data processing appliance according to Patent Claim 4 or 5,
**characterized**
**in that** the data processing appliance is provided for the visual display of at least two series of values from a spreadsheet or another data source.

7. Data processing appliance according to one of Patent Claims 4 to 6,
**characterized**
**in that** the data processing appliance is equipped with a selection means for the selection of at least one area or area element of the presented graphs,
wherein the data processing appliance is set up for the complete presentation of that graph and the associated area thereof,
the area or area element of which has been selected by the selection means.

8. Data processing appliance according to Patent Claim 7,
**characterized**
**in that** the selection means is a cursor moved by means of a computer mouse or selection by means of a touch-sensitive screen.

9. Data processing appliance according to one of Patent Claims 7 and 8,
**characterized**
**in that** the data processing appliance is set up for the complete presentation of the selectable graph in the topmost presentation plane and of the other graphs in the underlying presentation planes.

## Revendications

1. Procédé assisté par ordinateur de production et d'édition d'un diagramme en deux dimensions ayant au moins deux graphiques,
dans lequel on porte en abscisse une grandeur de référence et en ordonnée les valeurs associées,
dans lequel, pour chacun des graphiques à représenter, on munit une surface entre le graphique et l'abscisse d'une couleur de remplissage respective ou d'un motif de remplissage respectif,
dans lequel on représente les graphiques et les surfaces associées dans des plans de représentation superposés rapportés à une surface de représentation,
dans lequel on recouvre un graphique et la surface associée d'un plan de représentation plus bas par un graphique et par la surface associée d'un plan de représentation plus haut,
**caractérisé**
**en ce que** l'on produit et édite le diagramme par partie, dans lequel, pour chaque partie de l'abscisse, on représente un premier des graphiques et la surface associée à ce graphique par une valeur de représentation plus haute dans un plan de représentation plus bas et dans lequel on représente un deuxième des graphiques et sa surface associée par une valeur de représentation plus basse dans un plan de représentation plus haut.

2. Procédé suivant la revendication 1,
**caractérisé**
**en ce que** l'on utilise le procédé pour la représentation d'un ou de plusieurs troisièmes graphiques,
dans lequel on insère avec chacun des troisièmes graphiques un autre plan de représentation, et
dans lequel, dans chaque partie de l'abscisse, on associe les graphiques à représenter et les surfaces associées respectivement à l'un des plans de représentation,
dans lequel on associe les graphiques dans l'ordre croissant de leur valeur respectivement aux plans de représentation dans l'ordre décroissant et dans lequel on recouvre respectivement les représentations d'un plan de représentation plus bas par les graphiques et les surfaces d'un plan de représentation plus haut.

3. Procédé suivant l'une des revendications 1 ou 2,
**caractérisé**
**en ce que** l'on représente les graphiques et les surfaces respectivement par des pixels en utilisant comme largeur de chaque partie de l'abscisse la largeur d'un pixel.

4. Appareil de traitement de données pour la visualisation simultanée d'au moins deux graphiques dans un diagramme,
**caractérisé**
**en ce que** l'appareil de traitement de données est conçu pour l'utilisation de l'un des procédés suivant les revendications 1 à 3.

5. Appareil de traitement de données suivant la revendication 4,
**caractérisé**
**en ce que** l'appareil de traitement de données est un appareil de commande d'un agencement industriel d'automatisation,
dans lequel l'appareil de commande est conçu pour la représentation de paramètres de processus et de commande ou pour la représentation de valeurs de mesure.

6. Appareil de traitement de données suivant la revendication 4 ou 5,
**caractérisé**
**en ce que** l'appareil de traitement de données est prévu pour la visualisation d'au moins deux rangées de valeur d'un calcul de table ou d'une autre source de données.

7. Appareil de traitement de données suivant l'une des revendications 4 à 6,
**caractérisé**
**en ce que** l'appareil de traitement de données est équipé d'un moyen de sélection pour sélectionner au moins une surface ou une sous-surface des graphiques représentés,
dans lequel l'appareil de traitement de données est conçu pour représenter complètement le graphique et sa surface associée, dont la surface ou la sous-surface est sélectionnée par le moyen de sélection.

8. Appareil de traitement de données suivant la revendication 7,
**caractérisé**
**en ce que** le moyen de choix et de sélection est un curseur déplacé au moyen d'une souris d'ordinateur ou une sélection au moyen d'un écran tactile.

9. Appareil de traitement de données suivant l'une des revendications 7 ou 8,
**caractérisé**
**en ce que** l'appareil de traitement de données est conçu pour la représentation complète du graphique pouvant être sélectionné dans le plan de représentation le plus haut et de l'autre graphique dans les plans de représentation en dessous.
